# EUROPEAN PATENT APPLICATION

(11) **EP 3 501 769 A1**
(43) Date of publication of application: **26.06.2019**
(21) Application number: 17209534.1
(22) Date of filing: 21.12.2017
(51) Int. Cl.: B28B 1/00, B28B 7/34, B28B 23/02, E04B 1/35, E04G 21/04, B33Y 70/00, B33Y 30/00, B29C 64/106

(54) **METHOD OF VERTICAL FORMING OF A CONCRETE WALL STRUCTURE AND APPARATUS THEREFOR**

(71) Applicant: ETH Zurich, 8092 Zurich (CH)
(72) Inventor: GRAMAZIO, Fabio, 8005 Zürich (CH); KOHLER, Matthias, 8616 Riedikon (CH); FLATT, Robert, 8706 MEILEN (CH); HUTTER, Marco, 9230 Flawil (CH); REITER, Lex, 8052 Zürich (CH); WANGLER, Timothy, 8303 Bassersdorf (CH); ULRICH, Tobias, 8092 Zürich (CH); LLORET-FRITSCHI, Ena, 8003 Zürich (CH); SCOTT, Fabio, 8032 Zürich (CH); WERMELINGER, Martin, 8050 Zürich (CH)

(57) **Abstract**

A method of vertical forming of a concrete structure (10) comprises the steps of providing a reservoir (300) of concrete with a predetermined hardening characteristic; providing a reservoir (200) of a shell compound; building up a self-supporting circumferential shell acting as formwork having essentially the contour (22) of said concrete structure (10) through delivering the shell compound in an additive manufacturing process; and filling the self-supporting circumferential shell with said concrete.

## Description

### TECHNICAL FIELD

The present invention relates to a method of vertical forming of a concrete structure comprising the steps of providing a reservoir of concrete with a predetermined hardening characteristic and pouring the concrete in a formwork and an apparatus for executing such a method.

### PRIOR ART

Concrete is the most widely used material in the world, after water, with a usage of about 2 billion tonnes per year. This is mainly because of its natural phase transition from a fluid to a solid state and consequently its ability to flow and be easily placed when it is fresh, while being able to sustain loads after hardening. The great flexibility in terms of handling and placement of the material enables digital fabrication in the fields of architecture and construction. Digital fabrication means the application of digital modeling and/or technologies to the production of bespoke objects. Digital fabrication has been proclaimed in recent years as the "third industrial revolution". This includes 3D printing, a subset of digital fabrication, and a technology that is still in the nascent stages of realization in the fields of architecture and construction, notwithstanding the growing attention in recent years as reflected in publications as:
- B. Khoshnevis, Automated construction by contour crafting-related robotics and information technologies. Autom Constr (2004) 13: 5-19. http://dx.doi.org/10.1016/j.autcon.2003.08.012
- B. Khoshnevis, D. Hwang, K.-T. Yao, Z. Yeh, Mega-scale fabrication by Contour Crafting. Int J Ind Syst Eng (2006) 1: 301-320. http://dx.doi.org/10.1504/IJISE.2006.009791
- R.A. Buswell, R.C. Soar, A.G.F. Gibb, A. Thorpe, Freeform Construction: Mega-scale Rapid Manufacturing for construction. Autom Constr (2007) 16: 224-231. http://dx.doi.org/10.1016/j.autcon.2006.05.002
- S. Lim et al., Developments in construction-scale additive manufacturing processes. Autom Constr (2012) 21: 262-268. http://dx.doi.org/10.1016/j.autcon.2011.06.010
- A. Perrot, D. Rangeard, A. Pierre, Structural built-up of cement-based materials used for 3D-printing extrusion techniques. Mater Struct (2016) 49: 1213-1220. http://dx.doi.org/10.1617/s11527-015-0571-0
- Wangler et al. "Digital Concrete: Opportunities and challenges", RILEM Technical Letters, (2016), pp 67-75.

The primary advantages of digital fabrication - freeform architecture and precision material placement - can be combined with the additional advantages of increased construction speed, reduced costs for labor and formwork, and increased worker safety. Additionally, digital fabrication is expected to lead to more sustainable construction due to more efficient structural design by placing material only where it is needed, as well as reduced waste generation due to more efficient construction techniques, especially with respect to formwork. Finally, the addition of functionality has been identified as a clear case through which digital fabrication can gain in competitiveness over traditional construction processes.

Various digital fabrication technologies with concrete have been developed within the last couple of years, as mentioned in the abovementioned paper Wangler et al.. These technologies can be roughly divided into two general areas: form filling, and additive manufacturing.

Form filling means the application of custom made formwork systems, i.e. CNC milled formwork panels or inserts (e.g. wood or expanded polystyrene) are filled with concrete. The drawbacks are material waste (because of single-use formwork systems) and huge fabrication efforts.

The production of digitally designed and manufactured formworks has been a major application of digital fabrication and concrete. Computer aided manufacturing (CAM) has enabled the construction of formworks of very high complexity, requiring, however, custom made formwork inlays that are generally fabricated using a computer-numerical-controlled (CNC) mill to carve material out of materials such as expanded polystyrene foam (EPS) or wood. One example is the Spencer Dock Bridge in Dublin from Amanda Levete Architects. This bridge, constructed in 2012, required more than 100 formwork inlays to be custom milled for a single use. Other examples abound, such as the O-14 Tower by Reiser & Umemoto, constructed in Dubai in 2012, where CNC cut formwork inlays were used for the production of a unique structural facade with 1300 uniquely shaped openings. In spite of the geometrical possibilities, CNC milling is considered unsustainable due to the single use of the formwork and the slow, energy intensive production process as mentioned in L. Li, J. Yan, Z. Xing, Energy requirements evaluation of milling machines based on thermal equilibrium and empirical modelling. J Clean Prod (2013) 52: 113-121. http://dx.doi.org/10.1016/j.jclepro.2013.02.039.

Form filling does not escape the need for reinforcement, which in many cases must be custom made and installed. Despite its drawbacks, CNC milling of custom formworks remains one of the most efficient techniques to date for producing concrete structures with non-standard geometries.

Additive manufacturing according to emerging objects can inter alia mean the following three processes, which can be considered today to be relevant principles: binder jetting, in which binder is injected into a bed of aggregate, extrusion based printing, in which material is extruded layer by layer, and slipforming, in which material is slipped from a formwork vertically.

An alternative to the subtractive process of CNC milling is to digitally fabricate a stay-in-place formwork. This strategy can be more sustainable considering the inefficiencies inherent to subtractive processing, and the digitally fabricated formworks can have additional uses beyond that of merely formwork. An example is the Mesh Mould Metal process, developed at ETH Zurich, a further category of additive manufacturing, in which an industrial robot with a customized end effector bends and welds metal wires into a 3D mesh structure, which acts as a porous formwork during the concreting process and serves as reinforcement upon setting as explained in N. Hack, W.V. Lauer, Mesh-Mould: Robotically Fabricated Spatial Meshes as Reinforced Concrete Formwork. Archit Des (2014) 84: 44-53. http://dx.doi.org/10.1002/ad.1753, W.V.L. Norman Hack, Mesh Mould: Robotically Fabricated Metal Meshes as Concrete Formwork and Reinforcement (2015) as well as T. Sandy, M. Giftthaler, K. Doerfler, M. Kohler, J. Buchli, Autonomous repositioning and localization of an in situ fabricator. IEEE International Conference on Robotics and Automation. (2016) 2852-2858. http://dx.doi.org/10.1109/icra.2016.7487449.

Surface finishes can be effected robotically or manually. This process addresses the challenges that layer-based concrete printing processes are facing, namely the integration of reinforcement, and the formation of distinct layers, or "cold joints", due to inadequate layer intermixing. Due to the dexterity and versatility of the robot, complex mesh geometries can be fabricated without increasing costs, and a major advantage of this process is its application on site, where a mobile robot can produce these meshes in situ.

Alternatively, production of stay-in-place formworks can be done in a prefabrication setting, as for example in the case of recent developments in the use of 3D sand printing to produce non-standard complex concrete elements.

This process is a binder jetting process, where a print head deposits a liquid binder on a loose powder bed to bond the part layer by layer. Both inorganic and organic binders exist. To date, this process has been used primarily for the production of casting molds for metal parts, but recently is being investigated as a method to produce architectural elements with resolutions on the order of millimeters in Casting of concrete. http://www.voxeljet.de/en/case-studies/case-studies/casting-of-concrete/. Accessed 25 Aug 2016 as well as dbt, Digital Building Technologies. http://www.dbt.arch.ethz.ch Accessed 21 Aug 2016.

This process can take full advantage of the almost unrestricted geometric freedom of a binder jetting printing process and combine it with the structural capabilities of concrete, by printing elements that can subsequently be assembled and infilled with a structural concrete. Intricate branching topologies that allow for the reduction of concrete used can be designed, as well as inner structures that allow integration of additional systems. While this process has the limitation of all 3D printing processes, in which the element size is limited by the size of the printer, the most complex details designed into the elements do not lead to an increase in production time or cost, making it a competitive candidate for creation of formwork. Reinforcement remains a challenge with this technology, although steel fiber reinforced concrete can be infilled, or channels to allow reinforcement through post tensioning can be printed. Indeed, digital concrete can open an entirely new area of application for steel fiber reinforced concrete and another benefit to study flow-induced fiber orientation, due to the potentially unlimited geometrical possibilities of this technology.

Referring to Binder Jetting and in contrast to infilling either single use or stay-in-place formworks, additive manufacturing with concrete can be performed. The binder jetting process described earlier in the production of 3D printed sand molds can be applied to print concrete elements directly, either by using cement in the powder bed and injecting water or other liquid as binder, or by injecting cement paste into an aggregate bed. This has been under investigation for use in construction for a couple of decades as disclosed in J. Pegna, Exploratory investigation of solid freeform construction. Autom Constr (1997) 5: 427-437. http://dx.doi.org/10.1016/S0926-5805(96)00166-5, but only recently this process has been used to produce complex elements by architect Enrico Dini, as well as the California-based firm Emerging Objects publishing: Bloom, Emerging Objects. http://www.emergingobjects.com/project/bloom-2/. Accessed 21 Aug 2016., and D-shape. http://www.d-shape.com. Accessed 21 Aug 2016.

Compared to other 3D printing methods for architectural applications, binder jetting allows for a high degree of geometric freedom, as stated earlier, even allowing cantilevered or hollow parts because the unbound powder supports the part during fabrication. While parts with the structural capacity of unreinforced Portland cement can be printed as shown in G. Cesaretti, E. Dini, X. De Kestelier, V. Colla, L. Pambaguian, Building components for an outpost on the Lunar soil by means of a novel 3D printing technology. Acta Astronaut (2014) 93: 430-450. http://dx.doi.org/10.1016/j.actaastro.2013.07.034, again the introduction of reinforcement remains problematic. The layer height is restricted by the binding process, and determines both speed and the level of detail, and recycling of unbound cement powder may be problematic with exposure to humidity. Additionally, post-manufacture processing is often necessary, such as infiltration of epoxy or additional curing steps. The future challenge for binder jetting will be to broaden the spectrum of printable powder-binder combinations to increase the stability of the printed parts - including reinforcement - and to reach a more environmentally friendly and sustainable fabrication.

### Layered Extrusion

Layered extrusion 3D printing is the typical process that comes to mind when the term 3D printing is invoked, based on its widespread use in the production of custom parts out of various polymers, usually referred to as FDM. This technique, in which a digitally controlled nozzle precisely extrudes concrete layer by layer, has been researched extensively by several research institutions and companies over the last decade. The pioneer of concrete 3D printing is Prof. Khoshnevis from the University of Southern California, who developed a process called Contour Crafting as early as 2004 as shown in the citations he authored above, with the aim of printing high-rise buildings. A similar approach is being taken by the Free Form Construction research project at Loughborough University since 2010. Independent of scale, 3D printing requires a modular, transportable printer that must be as large as the structure being produced. In both processes, the layers are generally on the order of a few centimeters, and the formation of cold joints remains an open question. The incorporation of reinforcement is difficult, as steel rebar must not impede the movement of the printer head. This issue is addressed by printing hollow structures to place rebar afterward, with infilled concrete making the connection to the printed structure. This renders the process as essentially a stay-in-place formwork production process.

These two pioneering projects have rapidly affected the growing field of 3D printing with concrete, resulting in several research institutions and companies exploring the prefabrication of architectural elements. One example is the company WinSun in Shanghai, who recently succeeded in printing full scale houses in less than 24 h by prefabricating and assembling various portions of the structure. Other examples include the company Total Kustom from architect Andrey Rudenko, who recently produced a 3D printed hotel suite in the Philippines, and the project WASP, which launched the world's biggest 3D printer, a 12 m tall hexagonal shaped structure. The Chinese company HuaShang Tengda has recently 3D printed a 400 m2 villa around reinforcement through the use of a novel nozzle design, seemingly eliminating one of the major challenges of 3D printing concrete using horizontal extrusion based technology. Burgeoning research interest has led to the establishment of materials-based approaches in recently launched projects such as ConPrint3D at TU Dresden and 3D Concrete Printing at TU Eindhoven, as well as the XTreeE team in France.

One of the greatest challenges with 3D printing with concrete has to do with vertical building rate. The concrete must be soft enough to be extruded and to intermix with the previously deposited layer, but must support its own weight and the weight of the material to be subsequently deposited. However, formation of a cold joint should be avoided, meaning there is a finite "waiting time" between layers.

It is an object of the invention to address this issue with respect to production. It is an object to minimize cold joints as they impact final material structural performance and durability. This is in addition to the obvious impact that layering has on the surface finish.

In contrast to layered extrusion 3D printing of concrete, a process known as Smart Dynamic Casting (SDC), developed at ETH Zurich in 2012, scales down the well-known construction technique of vertical slipforming to produce non-standard concrete elements robotically. While traditional slipforming is useful in producing elements on the order of several m2 in cross section, SDC produces elements on the order of cm2 in cross section by robotically moving a defined formwork significantly smaller than the element produced. In both processes, concrete enters a hollow formwork in the fluid state, and exits in a hardening state, meaning that control of hydration is essential. At the scale of traditional slipforming, this is achieved by controlled delivery and placement of large batches with time, but in the case of SDC, hydration control is performed via chemical admixtures. A large batch of heavily retarded self-compacting concrete is pumped and activated by increments using accelerators, enabling a vertical building rate on the order of 1 m/h. Feedback process control is necessary, as the material that exits the formwork must be able to support the material above it, but cannot remain in the formwork for too long, as friction between the material and the formwork can lead to cracking.

With SDC, one can envision a whole array of vertical elements that can be produced with a single formwork concept, and a major advantage the process has is that implementation of reinforcement is possible during production. Additionally, the continuous nature of the process eliminates layering and cold joint formation. The formwork type will, however, constrain the geometric possibilities of SDC, meaning that formwork design is essential to the overall process.

WO 2014/121917 discloses such an apparatus and method for vertical slip forming of concrete structures.

Summarizing the prior cited art, it is noted that non standard shapes in construction can be quite efficient materially, but their construction is limited conventionally by the need for expensive milled formwork that is also single use and unecological. Recently, several projects (Contour Crafting, 3d concrete printing, Freeform Construction) have aimed at production of non standard shapes via an additive manufacturing process where concrete is extruded layer by layer. Another recently reported approach has been to print a (functional) insulation-foam as lost formwork could into which concrete is later cast as published under http://news.mit.edu/2017/3-d-printing-buildings-0426. These processes amount to printing of a lost formwork, as typically voids are printed and reinforcement is added post hoc with subsequent concrete infill to bond the reinforcement to the entire structure. Issues with this process, however, stem from the layering process, where cold joints can form, visible layering of the surface is typical, and stability of the printed structure during production can lead to inaccuracy. A recent process called Smart Dynamic Casting as shown in WO 2014/121917 A1 addressed the layering process by using a set-on-demand system to control cement hydration and allow shaping within a moveable formwork; however, this system is limited geometrically by the formwork.

### SUMMARY OF THE INVENTION

Based on the prior art it is an object of the invention to overcome the problems and issues of the prior art when providing unusual forms for a concrete building structure.

The invention provides a method of vertical forming of a concrete structure comprising the steps of providing a reservoir of concrete with a predetermined hardening characteristic; providing a repository or reservoir of a shell compound; building up a self-supporting shell acting as said formwork or as a part of said formwork providing essentially the contour or one or more parts of the contour of said concrete structure through delivering the shell compound in an additive manufacturing process and filling the self-supporting shell with said concrete.

The formwork provided by the method can be a building up of a self-supporting closed circumferential shell having essentially the contour of said concrete structure through delivering the shell compound in an additive manufacturing process. It can also be a partial shell, wherein other parts of the closed circumference are provided by traditional formwork as known from prior art as the end parts of a wall can be board that are placed first and not printed. Then the intermediate opposite wall portions are printed either simultaneously or one after the other. The first mentioned option leads to a further possibility of the method. The filling of the self-supporting circumferential shell (e.g. partly traditional "shell") with said concrete can be executed after having provided the entire formwork for the filling step instead of following the creation of the additive manufactured shell in a predetermined height distance.

The concrete element to be produced may also contain inner structures, for which the shape may also be produced by additive manufacturing simultaneously or not with the main shell structure. The moulds for these inner structures may also be produced without additive manufacturing and placed before or after production of the shell. In the case these inner moulds are produced by additive manufacturing, the outer mould may be partially or completely produced using elements not produced by additive manufacturing and that are placed either before or after the completion of the inner printed structures.

In other words, A method of vertical forming of a concrete structure comprises a device or combination of devices providing a shell formwork and possible inner structure, comprising the steps of: placing the shell material through delivering the shell material in an additive manufacturing manner to create a formwork layer, building up layer by layer a self-supporting closed shell formwork, possibly including inner cavities similarly produced, or a device or combination of devices providing concrete with controlled hardening characteristics comprising the step of placing the concrete in the formwork built by device defined above.

Such a predetermined hardening characteristic can be an actively or passively controlled hardening characteristic. There are inter alia two main options: First the concrete is prepared in large batches, pumped and activated by intermixing an activator, before being delivered into the mould. Second, the concrete is continuously prepared fresh. This means that raw materials are mixed, producing a concrete with a quite short open time, that is then delivered into the mould as more fresh material is being mixed. There are then intermediate solutions, where smaller batches are regularly prepared. It is necessary to provide concrete volume with initial retardation and activation before delivery.
The method allows to decouple the shell production from its filling. This would allow to first manufacture the mould and then fill it in a controlled ways, so as to avoid it breaking due to hydrostatic pressure. The essence is therefore the combination of characteristic hardening and control of the concrete and the printing of the shell. This also includes to fill the shell with a gradual hydrating concrete as this also eliminates forworkpressure.

The shell can be filled with concrete in a way that the projecting edge of the shell in the vertical direction above the average height of the concrete level is in a predetermined interval, especially in an interval between 1 millimetre and 70 centimetres. It is possible that the filling of the concrete is always effected in contour regions where the difference between the concrete fill level and the leading edge of the shell is highest and that the contour edge building step is always working in portions of the contour where the difference between the shell edge height and the concrete level is lowest with the proviso that the shell edge is growing constantly in all portions of the contour. While 30 centimetres can be seen as an upper boundary for the projecting edge, other preferred upper boundaries can be 10 centimetres. For the minimum spacing, 1 or 2 millimetres is a lower practical limit, 5 millimetres can also be chosen and 1 centimetre would be the highest proposal there, thus providing three ranges of 1mm to 70 cm, preferred 5 mm to 45 cm and more preferred 1 cm to 20 cm.

The maximum height is constrained by the need to avoid the buckling of the shell. In first approximation, this depends on the slenderness of the shell and its elastic modulus, which over the elevation considered is not constant in most cases. The higher the shell is chosen, the thicker it must be and the stiffer must it be.

The invention is based on the insight that the "mass concrete" starts to be placed before the mould is produced to is final height. Of course, placing concrete must be synchronized with the mould production through a control unit.

The average vertical speed of the shell building step is synchronized or predetermined dependent on the hardening characteristic of the concrete such that the hardening advances fast enough through the poured concrete that the already built circumferential shell adjacent to poured concrete bears the sideways directed pressure of the hardening concrete. In other words, the shell acquires sufficient predetermined strength against lateral forces. Such lateral forces are generated through the pure weight of poured concrete. Since the concrete is hardening over time, these forces decrease over time at a given height. Therefore the height growth of the wall is limited by the strength and resilience of the shell compound building the contour wall and the concrete hardening status. Moreover, the shell aspect ratio and stiffness also limit the height of the shell that can be produced above the concrete level, more specifically, above the level at which the concrete is not exerting lateral forces on the shell. In this sense, the already hardened concrete plays an active role in stabilizing the shell structure as it is built. The shell can be reinforced locally to increase the shell stiffness where needed, e.g. in long straight lines of the wall.

Therefore, synchronizing production rate and concrete hardening is essential. For this, two main approaches are possible. First, concrete is prepared with a retarder and pumped to the mould and a setting or hardening accelerator is intermixed into the concrete in line with this operation. In this way, the setting time of the delivered concrete is concrete, which allows more regular production rates. Alternatively, fresh concrete with a short setting time can be prepared continuously, with a continuous or semi-continuous up-stream mixing of components. Various combinations of these options can be considered, the objective being for each portion of delivered concrete to have a relatively constant setting time throughout production.

The wording "circumferential shell" in the present specification comprises two slightly different formwork approaches. One approach comprises a plurality of different formwork portions, comprising on one side one or more traditional formwork walls as board walls, e.g. at the side ends of a wall, and on the other side one or more shell portions provided through additive manufacturing. The other approach comprises an "additive manufacturing" only shellwork, providing the entire circumference of the formwork structure.

It has to be noted that the "circumferential shell" can comprise additional topological structures as one or more possible inner shells.

In other words, the formwork built through the shell building step can comprise a circumferential self-supporting shell in one piece. It can also comprise at least one self-supporting shell reclining adherently at opposing free ends at non-additive-manufactured formwork parts, e.g. traditional board formwork. In both cases the self-supporting shell can optionally comprise said additional topological structures.

The building up step of the circumferential shell can be executed essentially in parallel with the filling step of the concrete or the two steps are executed at least partially alternating. The alternating sequence can be necessary to avoid crossing the paths of movement of the robot arms, if there are two arms. The shell deposition only requires one arm; concrete delivery only needs an outlet of a pumping line or continuous mixer. Two arms can provide advantages for material delivery. It is also possible that the shell building robot is always turning around the contour, mostly in circular movement not going beyond 360 degrees.

It is also possible to replace robot arms by any system capable of moving and printing as e.g. any crawling robot. Therefore, this relates to a movable added manufacturing device. The printing device or robot may also include a climbing mechanism allowing it to move up on the structure that is being produced.

A reinforcing structure can be provided inside the projected contour of the shell before the build-up process of the shell starts. In this case "inside projected contour" does not mean that the shell will follow the reinforcing structure grid. The shape of he structure can change with height.

A reinforcing structure can also be provided in an additional reinforcement building step, wherein the structure building step is providing throughout the method a vertical structure height which is higher than the corresponding vertical height shell surrounding the reinforcement.

Then at least one, preferably two of the three building steps, i.e. the additional reinforcement building step, the self-supporting circumferential shell building up step as well as the filling step of the concrete are performed at the same time to increase the vertical build-up speed.

The shell can be a stay-in shell or an easy to remove shell, as peelable, meltable, soluble or bio-degradable. It is noted that such a peelable shall can be characterized as a take away shell without being bio-degradable, e.g. provided by an FDM (fusion deposition modeling) printing process that runs in parallel to the filling.

An apparatus for executing the method according to any one of the embodiments comprises a concrete reservoir, wherein concrete reservoir means a reservoir for concrete or for its raw materials, a shell compound repository, wherein for a FDM process the shell compound repository could be a polymer cable on a roll, a concrete delivering device, which could be a robot arm, a shell compound delivering device, which also could be a robot arm, a concrete conduit connecting the concrete reservoir with a concrete pouring nozzle, a shell compound conduit connecting the shell compound repository with a shell compound delivering device, , a control unit configured to control the movement of the concrete delivery device and of the shell compound delivery device, which can be robots as mentioned above.

In case that a valve or pump is provided within the shell compound conduit and a valve or pump within the concrete conduit, they control the opening of the valves or the function of the pumps to build up the shell and filling the contour with concrete. The pumps are usually chosen, when the reservoirs are provided at the ground and the concrete and shell building compound has to be pumped to the nozzles. If reservoirs or repositories being reservoirs are provided higher than then concrete structure to be built, then it is possible to only use valves to let the products flow based on gravity to the nozzles or delivery devices.

One further step of the method comprises activation of the concrete which is necessary after preparing bulk concrete and delivering it. This can be done by continuous up-stream mixing. The activator could be admixed through static or continuous mixers for the intermixing of the activator with the concrete.

The apparatus can comprise a further 3D additive manufacturing unit provided within the apparatus to build up a reinforcing grid before or while the build-up step of the shell compound happens.

This invention addresses these issues through the printing of a thin shell which is filled simultaneously by a set-on-demand concrete which builds up the strength to support its own weight within a short period of time. As the formwork pressure is limited by this, the shell can be thin to save material and enhance surface quality. The geometric possibilities are greatly expanded as the shell printhead acting as formwork printhead has more freedom of movement, and implementation of reinforcement is also possible within the process. The controlled strength development also resolves issues of formwork stability during production

An apparatus according to the invention uses a shell compound delivery device, e.g. a nozzle on a moveable, digitally controlled printhead to dispense a material for a thin formwork shell (either to stay in place or to be removed post production). The material is added layer by layer to create this thin shell, while simultaneously there is concrete being dispensed into the formwork shell. Such concrete can be self-compacting concrete (SCC), vibrated or sprayed concrete. As formwork pressures from SCC can be quite high, strength buildup must be almost immediate and controlled upon dispensing into the formwork. This is effected by use of chemical admixtures, namely a combination of a retarder and an accelerator, as used in Smart Dynamic Casting published under WO2014/121917. Thicker concrete may also be placed and compacted, typically using an adequate vibrating device offering compaction while not affecting the shell stability or that of the already formed structure. An additional option is for the concrete to be sprayed so as to benefit from the early strength development of shotcrete. In this case, the shotcreteing conditions (speed, orientation, etc) must be adjusted to avoid damaging the shell and possible inner shells.
The control of the hydration by admixtures is essential for the entire process. These chemicals modify the rheology as well as the setting and hardening kinetics of the cementitious material. They can be used to delay the hydration allowing the material to be prepared ahead of time and stored without it hardening. Other admixtures would then be used to activate the material before it is placed. Alternatively the cementitious materials can be continuously produced, typically offering shorter setting and hardening times, although here also the inclusion of chemical admixtures can be beneficial to further enhance or delay structural build up, setting and hardening kinetics as shown in Wangler et al, RILEM Technical Letters, 2016.

The invention is based on the insight that the placement of the partially hardened set-on-demand concrete inside the just built formwork shell and the consequent release of the pressure from the formwork shell are intertwined method steps allowing the building of nearly freeform concrete structures.

According to the invention a thin layered shell that acts as a formwork is produced, e.g. extruded, at the border edges of the concrete structure to be built. At the same time, concrete is cast into this shell and its hydration is controlled by activating it in the delivery line through the intermixing of activator so that the concrete builds strength at a determined rate, thus supporting its own weight rapidly enough. The advantage is that the printed shell (stay in place or removable formwork) does not need to be as strong and stiff compared to existing 2-step processes. The accessibility for concrete placement is improved and geometric freedom is expanded.
- The formwork only need to sustain the cast concrete shortly. Moreover, once hardened, the concrete stabilizes also the formwork, making it is less prone to buckling/ stability issues during shell extrusion, thus the shell need less strength and stiffness and can therefore be thinner
- The method is a 1-step process allowing integration of reinforcements allowing faster building of height in such structures.
- Since the concrete stabilizes the formwork less strength and stiffness is required, therefore the shell can be thinner, thus increase the print resolution which inherently improves the surface quality of the final structures.

The process can be fully automated, although in the overall optimum of cost-performance, the inclusion of human labour at various steps for the process and the control thereof may be advantageous. Bespoke, load-bearing concrete elements can be efficiently prefabricated because of the construction process. Structurally optimized concrete elements can be produced without the adaptation of a formwork system, which is the case for the current SDC process. The material can be placed where needed, which leads to significant savings of material and consequently to a more sustainable construction. Furthermore, there is less material waste because of the missing formwork system. Novel architectural designs can be realized at reasonable costs.

As shell or shell material any printable material may be used. Printable is defined as the material property allowing a material to be placed, stay in place upon placing and being able to support material to be printed on top. Preferably placing is achieved by displacing the shell material to a defined and controlled place, preferably by extrusion or drop-wise deposition. Extrusion is defined as any process by which a material is sliding or pressed out or along a surface.

Suitable as shell materials are any materials, which sustain the weight after placing and build up any enough strength over time, through a physical or a chemical process, to sustain additional material deposited above it. Preferably the transition occurs by drying, attractive particle interactions, granular friction, entanglement, foaming, gelation or more preferably by temperature change, e.g. temperature reduction or temperature increase through inclusion of magnetic particles and application of an oscillating magnetic field, crystallisation, precipitation, crosslinking, ultraviolet curing, sintering or hydration.

Materials that can be used for build-up of the shell are can be divided into different categories as Recyclable, especially wax, clay, tapes and similar materials, Biodegradable (removed with water) as Hips, PLA, PVA, combinations as Biodegradable and recyclable (since biodegradable material can also be cut of washed and remolten and become recycled) as Hips, PLA, PVA, and also Stay in place material as carbon fibres, steel, cementitious material, ceramic/ bone like material.

The invention provides a fast vertical building rate, eliminating at the same time so-called cold joints as known from the 3D printing of concrete, i.e. different not well connected layers of concrete. The design can be freely chosen with a high-resolution surface articulation. It is possible to integrate rebars as prefabricated elements or in an inline robotic additional 3D printing process.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematical concept view of a method according to an embodiment of the invention;
- Fig. 2: shows a further schematical concept view of a method according to an embodiment of the invention;
- Fig. 3: shows two embodiments of finished concrete structures with stay-in-place and bio-degradable formwork;
- Fig. 4: shows a schematical view of three steps of a further method of concrete column forming according to the invention with a prior provided reinforcement structure;
- Fig. 5: shows a schematical view of three steps of a further method of concrete column forming according to the invention with an ad-hoc provided reinforcement structure;
- Fig. 6: shows different topologies of concrete structures for columns built according to an embodiment of the invention;
- Fig. 7: shows different topologies of concrete structures for walls built according to an embodiment of the invention;
- Fig. 8: shows a cross-section view of a topology of a concrete structure built according to an embodiment of the invention;
- Fig. 9: shows a diagram of the layer height measured against printing speed for a geometry built for embodiments according to the invention;
- Fig. 10: shows four different printing dimension procedures for the shell;
- Fig. 11: shows a net like structurally optimized structure of the printed shell;
- Fig. 12: shows a further schematical concept view of a method according to an embodiment of the invention;
- Fig. 13: shows the subsequent filling of the shell formwork according to the embodiment of Fig. 12;
- Fig. 14: shows a further schematical concept view of a method according to an embodiment of the invention; and
- Fig. 15: shows a further schematical concept view of a method according to an embodiment of the invention.

### DESCRIPTION OF PREFERRED EMBODIMENTS

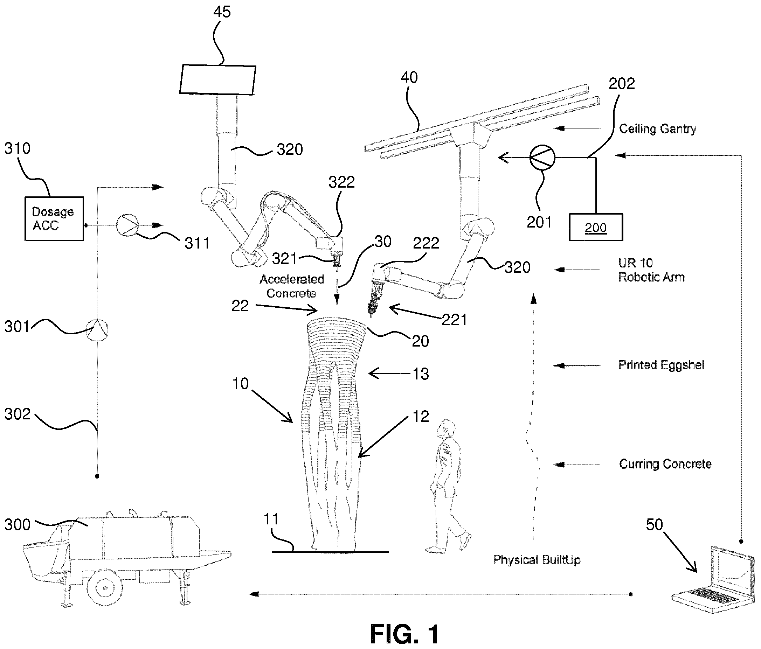

Fig. 1 shows a schematical concept view of a method and apparatus according to an embodiment of the invention.

The apparatus comprises a shell delivering device 200, which can be a robot, and a concrete delivering device 320, which can be a robot. In the present specification the words are used synonymously wherein it is clear to someone skilled in the art that a robot can always be replaced by a movable device capable of performing the task of the robot, e.g. shell delivery or concrete delivery. They are visualized in Fig. 1 through the robotic arms allowing to position and orient the shell compound delivering head 222 with its shell delivering nozzle 221 as well as the concrete delivering head 322 and the concrete delivering nozzle 321. The two robots 220 and 320 are attached at a ceiling gantry 40 or 45, respectively. Of course, one or both of the robots 220 and 320 can also be positioned on ground or at a crane or be an autonomous device capable of climbing on the structure being printed.

The built concrete element 10 stands on ground 11.

In the vicinity and connected with corresponding pipes are provided a retarded concrete reservoir 300 as well as an shell compound reservoir 200. They are connected via pipes 202 and 302 with the nozzles 221 and 321, respectively. Within the conduits r pipes 202 and 302 are provided pumps 201 and 301 to deliver a controlled amount of shell compound and concrete, respectively. An accelerator reservoir 310 is provided and the accelerator is added through action of pump 311 to the concrete, e.g. through a mixer (not shown). Of course, it is possible to mount the reservoir 200, 300 and 310 above the heads 222 and 322 so that the shell compound and concrete are pushed by gravity through the conduits. Then the pumps 201, 301 and 311 can be replaced by valves or a pump-valve combination.

In both cases, all pumps and valves as well as the robots are controlled by a control unit 50.

Fig. 1 shows the situation where the built concrete element 10 comprises a hardened bottom part 12 and a just built up upper part 13 up to the upper edge 20. The upper edge 20 is always a closed line creating an upper opening 22 allowing concrete to be poured into it to fill this projecting edge 20. It is also possible that the upper edge is built continuously by a here essentially circular upgoing motion of the shell compound head building the edge 20 in a sequential way coming back to complete "the lap" in a time allowing the shell compound to harden in a way that poured concrete does not distort the shell. This of course asks for an intermittent pouring of concrete since the path of movement of the shell delivering robot 220 will cross the path or position of the concrete delivering robot or the dropping path of the concrete and accelerator mixture.

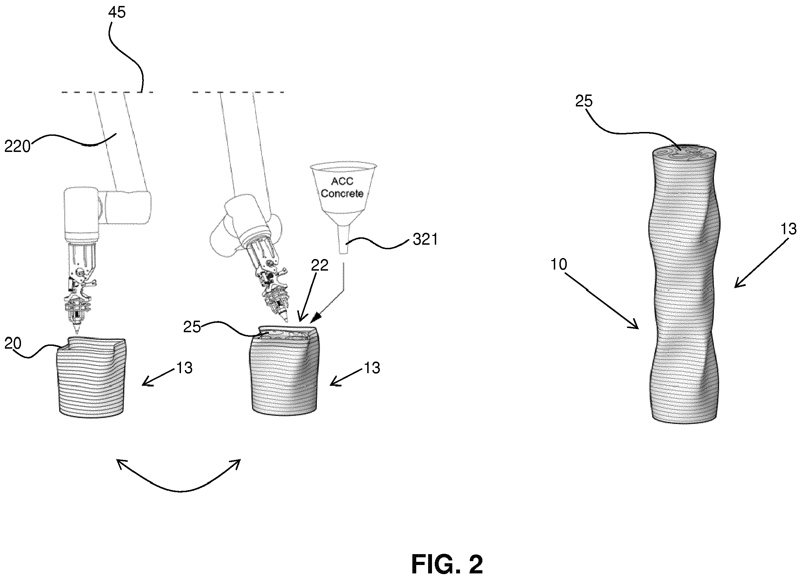

Fig. 2 shows a further schematical concept view of a method according to an embodiment of the invention with two alternate building steps on the left side and a built-up column as finished product of these alternate building steps on the right. Identical features receive identical reference numerals throughout the drawings.

The alternate building steps are printing a new layer of shell at the edge 20 above the concrete column in preparation 13. Then concrete 25 is poured into the upper opening 22 created by the surrounding shell edge 20.

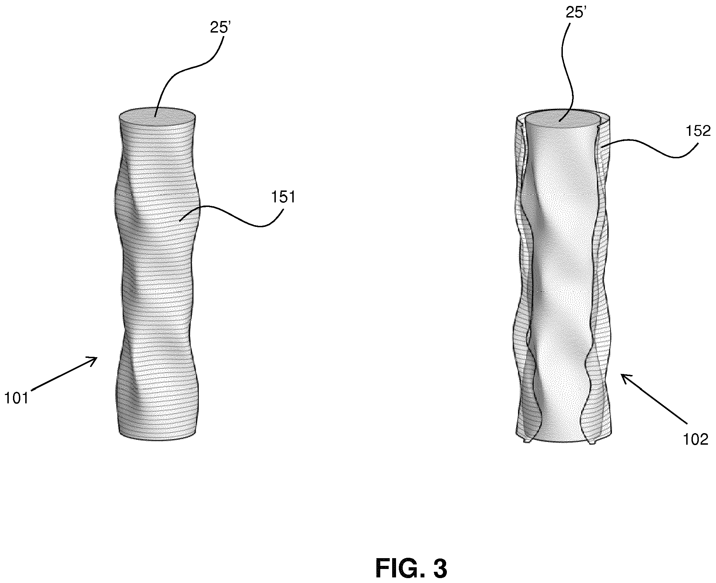

Fig. 3 shows two embodiments of finished concrete structures, one structure 101 with a stay-in-place formwork and one structure 102 with removeable, bio-degradable, recyclable, reuseable, peelable, photo-degradeable or chemically modificable formwork.

The finished concrete structure 101 on the left side of Fig. 3 comprises a core of hardened concrete 25' and a stay-in-place formwork shell 151, visualized in Fig. 3 by the horizontal or helical lines, indicating the line-wise providing of shell compound at the outer edge of the structure 101.

The finished concrete structure 102 on the right side of Fig. 3 comprises a core of hardened concrete 25' and a stay-in-place formwork shell 152, visualized in Fig. 3 by the horizontal or helical lines, indicating the line-wise providing of shell compound at the outer edge of the structure 101. This formwork 152 can be removed - in some embodiments - for example by peeling, scraping, melting, heating, evaporating, etc..

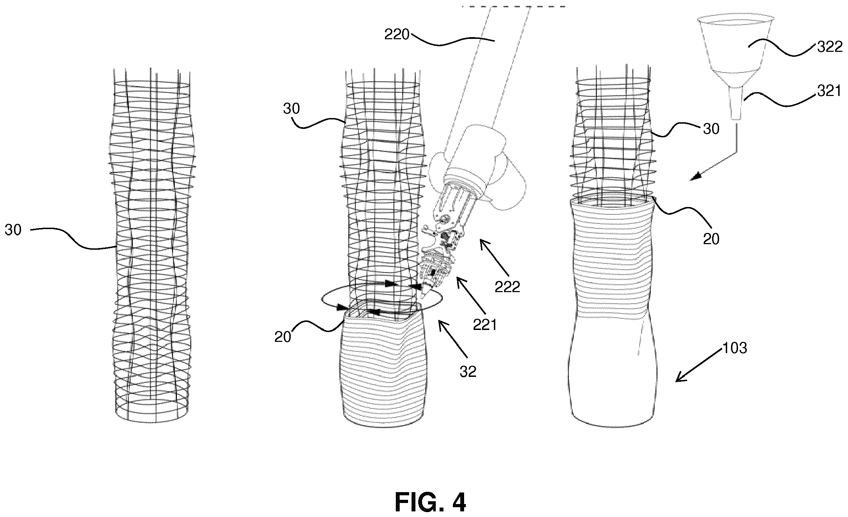

Fig. 4 shows a schematical view of three steps of a further method of concrete column 103 forming according to an embodiment of the invention with a prior provided reinforcement structure as reinforcement grid 30. The representation on the left shows the reinforcement grid positioned on the ground or connected to an underlying reinforcement structure. It is here an essentially circular structure as a mesh in a similar to cylindrical form, in order to create a concrete column structure like in Fig. 3 with an internal reinforcement. The wavy form of the column 103 shows that any other free-form column or wall structure can be built with the method according to the invention.

Here, shell delivering device 220 is turning around the internal reinforcement grid 30 as shown in the middle representation of Fig. 4. It is possible to turn around in 360 degree or it can be two half-circles according to the double arrows 32. The shell compound is built in a predetermined distance from the internal reinforcement grid 30. This can be determined through the control unit 50 with knowledge of the form of the reinforcement grid 30. It can also be calculated online, when sensors (not shown) in the robot head 222 determine the form of the grid 30 and the nozzle 221 is positioned in a predetermined distance from the essentially horizontal and vertical grid 30 wires. The interspace between the wires is interpolated. Following providing the up-built shell at the edge 20 is followed (not shown) by pouring concrete preferably in between the grid 30. The grid 30 then gives additional stability and permits a faster rising of the shell edge 20. Although the concrete pouring head 322 is shown beside the concrete column structure 103, it is clear that nozzle 321 can also be introduced from above between the grid 30. The shell can be a stay-in shell or a bio-degradable shell.

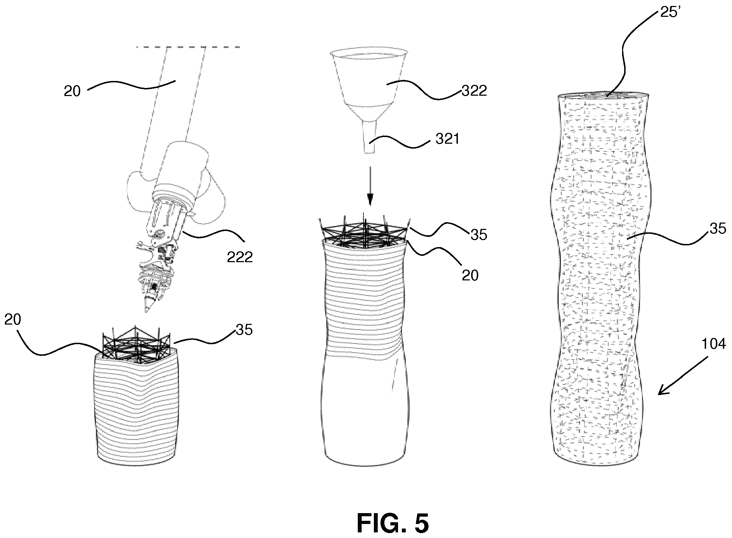

Fig. 5 shows a schematical view of three steps of a further method of concrete column forming according to the invention with an ad-hoc provided reinforcement structure 35. Here, either a starting grid 30 is provided or even initially a further robot (not shown) provides with metal 3D-printing the ad-hoc reinforcement structure 35, which is shown in the left side image of Fig. 5. The shell compound robot 220 provides the shell 20 around the ad-hoc reinforcement grid 35. This shell 20 can be provided in a predetermined calculated distance from the calculated reinforcement grid 35 but can also be positioned based on sensor data from head 222 relating to adjacent grid wire positions. Then concrete is poured into the structure.

This sequence of steps is repeated, whereas it is possible that always two of the three steps are executed at the same time. It is preferable that at the same time that the next centimetre or decimetre of reinforcing grid 35 is 3D printed, the previous edge 22 of the shell 20 is filled with concrete. Then this concrete filling part can stop and be replaced by adding further shell 20 material around the growing reinforcing grid 35. Then the printing step of the reinforcing grid 35 is stopped and the concrete filling step is started while the height of the shell 20 is still increased.

In any case, either by subsequent or simultaneous execution of these three different portions of the method a column as shown on the right side of Fig. 5 is created with the inner grid 35, the stay-in or bio-degradable formwork 20 on the outside and the hardened concrete 25' inside.

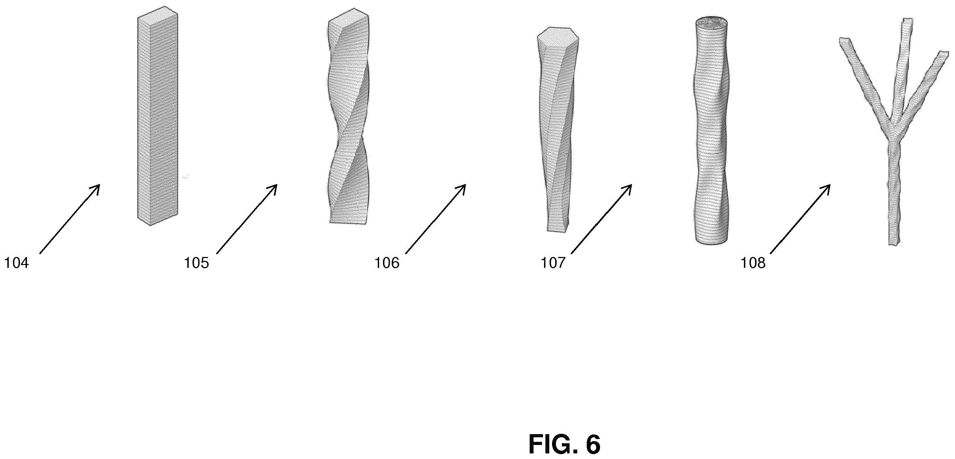

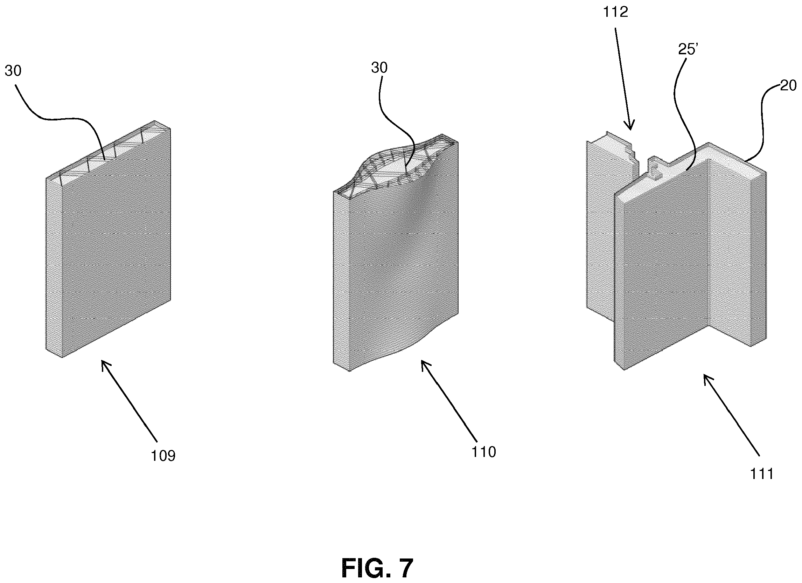

Fig. 6 shows different topologies of concrete structures for columns built according to an embodiment of the invention and Fig. 7 shows different topologies of concrete structures for walls built according to an embodiment of the invention.

The standard column 104 can be a parallelepiped or may have a different form as elliptic. The twisted column 105 can be built directly without formwork difficulties. The column can have a varied cross section 106. The column can have varied surface qualities 107 and it can be a branched column 108. These columns 104 to 108 are shown as columns without a reinforcing grid. They can comprise such a grid. Such grids 30 are shown for the standard wall 109 and the double curved wall 110 of Fig. 7. Finally an interlocking wall system is shown with wall elements 111 and 112, where the interlocking parts are provided by the walls through the shell walls 20 encompassing the hardened concrete 25'.

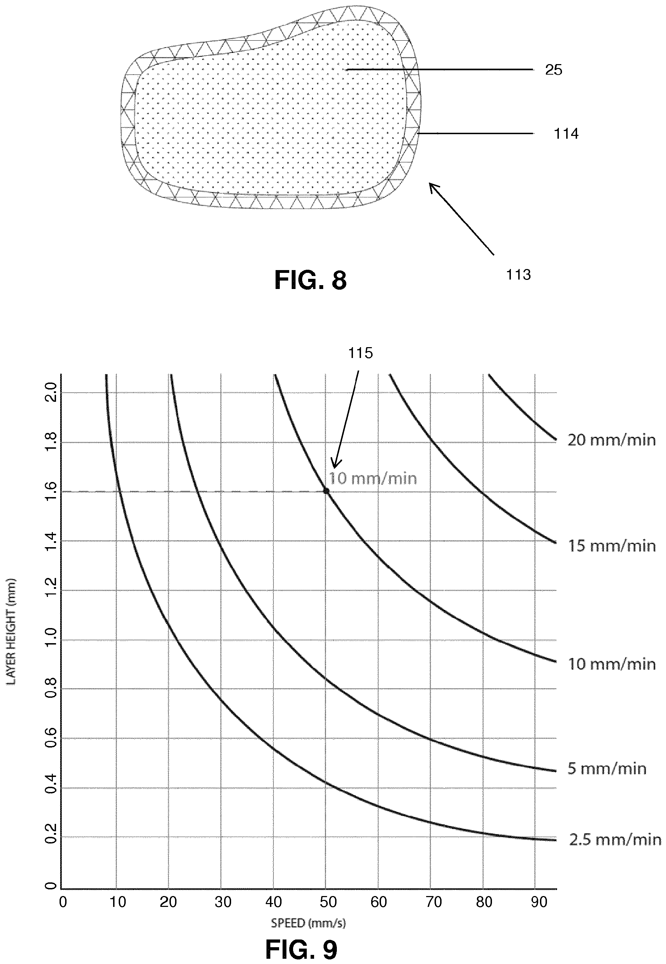

Fig. 8 shows a cross-section view of a topology of a concrete structure 113 built according to an embodiment of the invention. Here, for a stay in place material a bone-like shell 114, which is partly hollow, can be printed. This allows to strengthen the shell 114 without the addition of more material. Reference numeral 25 relates to the concrete infill.

Fig. 9 shows a diagram of the layer height measured against printing speed for a geometry with a fixed area of A = 125cm². This means for example a printing speed of 50 mm/s paired with a layer height of 1.6mm will result in a vertical building speed of the structure ("pumping rate') of 10 mm/min shown at production point 115.

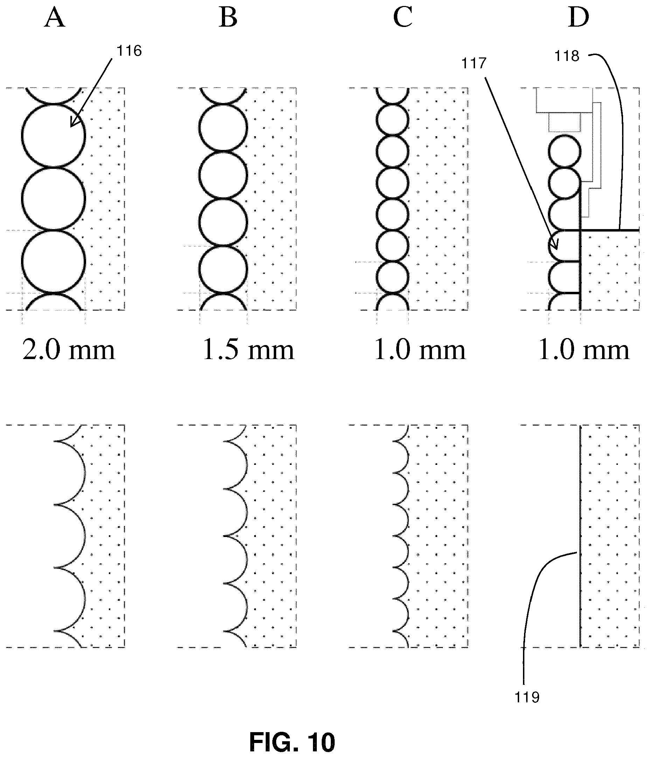

Fig. 10 shows four different printing dimension procedures for the shell. The four top images show printing with a shell paste diameter of 2, 1.5, 1 and 1 millimeter, respectively, the concrete wall structure of the four lower images result. It shows that with a fixed printing speed of 50 mm/s an increase in layer height will automatically result in a higher pumping rate, as well as a lower resolution and a higher total wall thickness. The diameter of printed shell material 116 for one layer in image A is 2 millimeters. The height of 6 millimetres is reached with three turns, whereas for a 1 millimetre material, six turns are necessary. Image C and D show a different approach. While the concrete level 118 in image D is still building, the deposited material balls in cross-section 117 are smoothened on the side towards the concrete with a trowel attachment to the nozzle as shown in Fig. 10D. Adding this trowel attachment allows the shell to be smoothened, resulting in a smooth surface finish 119 compared to the results shown on the left three images of the lower line of images.

In a long, straight or concave wall built with this technique according to the invention, the shell may need to be reinforced, even if the forces acting on them are low. Such Reinforcement or local strength ties could be added to avoid buckling of the shell. Such elements could comprise local cross-ties from one to the other side of the shell, printing hooks or other formations that reach into the wet concrete (but not to the other side) from time to time or external stiffening ribs or geometric features like stiffened double shell.
It is possible to print the shell with varying thickness. Experiments have shown that material can be preserved in providing a non-homogeneous shell structure, e.g. having portions of the shell having e.g only between 30% to 70% of the wall thickness of the remaining shell structure.

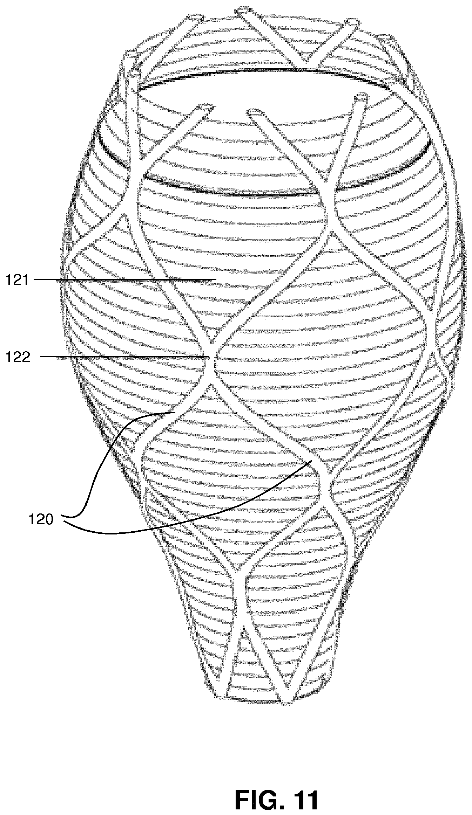

A further possibility is to print a net like structurally optimized structure which indeed still functions as a shell as shown in Fig. 11, showing the additive manufactured shell as a combination of main structural elements 120 and a 'net-like' supporting structure 121in between. Both would be the same material, the supporting elements 121 would however be much smaller in size. The supporting elements 121 can be provided in a sequence as shown in Fig. 10 with deposited elements 116 or 117 shown in cross-section in said Fig. 10 and main structural elements 120 in vertically oriented waveforms with crossing or contacting points 122. Of course, other interconnected schemes of the main structural elements 120 are possible. It is only mandatory, that the supporting elements 121 form an adjacent closed surface for every height of the additive manufactured shell, might it be printed or provided according to other additive manufacturing methods.

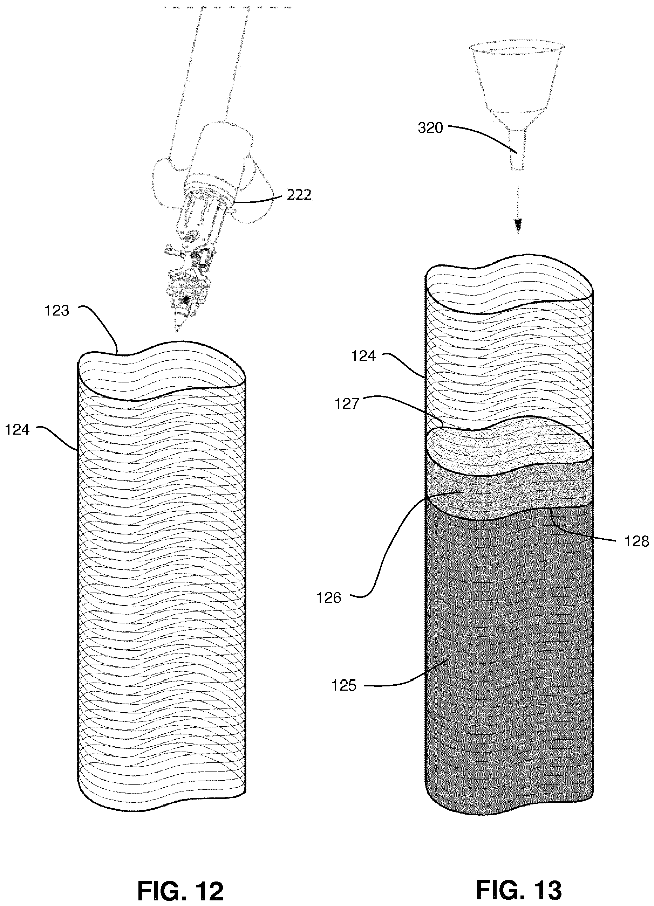

Fig. 12 shows a further schematical concept view of a method according to an embodiment of the invention. A shell compound delivery head 222 is positioned above the upper edge 123 of a hollow shell 124 showing that within this embodiment only the hollow shell 124 is constructed. It is also possible that the hollow shell 124 is not completely provided through added manufacturing via the shell compound delivery head 222 but one or several parts of the shell are constructed as traditional formwork, where the added manufacturing shell formwork 124 is contacting the traditional formwork.
Fig. 13 shows the subsequent filling of the shell formwork 124 according to the embodiment of Fig. 12 in a partly transparent representation. Reference numeral 125 shows the lower section of the filled hollow shell formwork 124, which comprises hardened concrete which possibly is supporting the upper parts of the shell 124. Reference numeral 126 designates hardening concrete which is of course exerting pressure onto the shell 124. Of course it is preferred that there is no specific hardening line 128 between the hardened concrete 125 and the hardening concrete 126. This depends on the way the next lots of concrete are added to the hollow place inside shell 124. Reference numeral 127 designates the upper surface of the hardening concrete. Here, the filling step is performed within the context as shown in Fig. 13, whereas the hollow formwork is formed in a separate previously executed shell forming step with the result shown in Fig. 12. This can of course be a shell forming step where the shell 124 parts are reclining against segments of a traditional built board formwork.

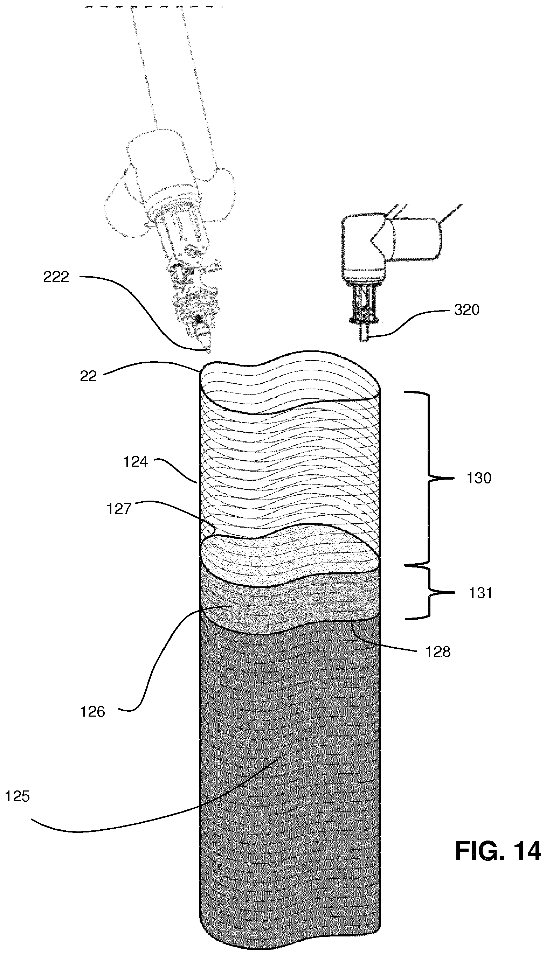

Fig. 14 shows a further schematical concept view of a method according to an embodiment of the invention. Here, the hollow shell 124 is built with the shell compound delivering device 222 while the concrete is delivered through delivery head 320. This can be done at the same time or to some extent alternately. Usually the additive manufacturing shell construction with the shell compound delivering device 222 builds a height 130 above the level 127 of hardening concrete 126 and an additional height 131 above the level 128 of hardened concrete. The shell 124 is filled with concrete in a way that the projecting edge 22 of the shell 124 in the vertical direction above the average height 130 of the concrete level 127 is in a predetermined interval, especially in an interval between 1 millimetre and 70 centimetres, optionally between 5 millimetres and 40 centimetres and further optionally between 1 centimetre and 20 centimetres. The height 131 can be of one to several centimetres up to e.g. 10 centimeters.

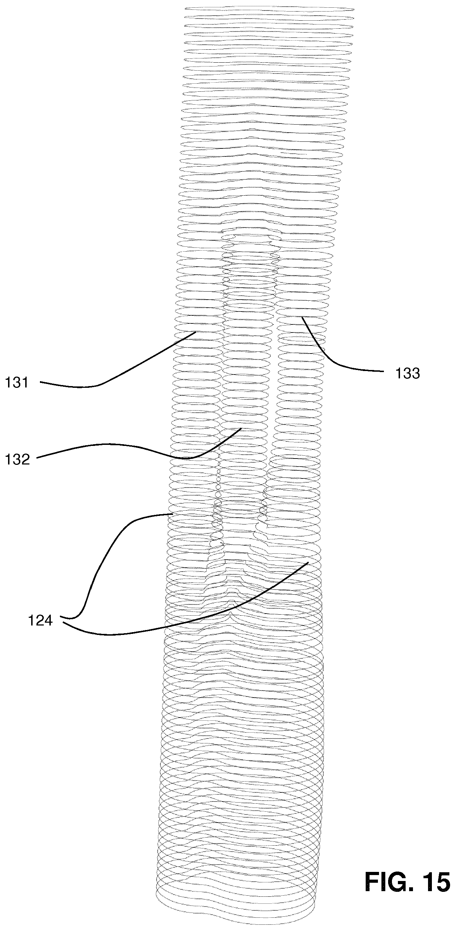

Fig. 15 shows a further schematical concept view of a method according to an embodiment of the invention. Shell 124 bifurcates in a number of different column parts 131, 132 and 133 before reuniting in one single column shell 124 again. Each contour line of Fig. 15 can be one extruded element 116 as shown in Fig. 10, thus building singular contour lines or a continuous helix shaped line.

**LIST OF REFERENCE SIGNS**

| | | | |
|---|---|---|---|
| 10 | built concrete element | 45 | gantry |
| 11 | ground | 50 | control unit |
| 12 | bottom part | 101 | finished concrete structure with stay-in formwork |
| 13 | just built upper part | | |
| 20 | upper edge | 102 | finished concrete structure with bio-degradable formwork |
| 22 | upper opening | | |
| 25 | concrete | | |
| 25' | hardened concrete | 103 | concrete structure with integrated reinforcement grid |
| 30 | reinforcement grid | | |
| 32 | double movement arrow | 104 | standard column |
| 35 | ad-hoc reinforcement grid | 105 | twisted column |
| 40 | gantry | 106 | varied cross section |
| 107 | varied surface qualities | | concrete |
| 108 | branched column | 128 | hardening line |
| 109 | standard wall | 131 | column part |
| 110 | double curved wall | 132 | column part |
| 111 | interlocking wall system element | 133 | column part |
| | | 151 | stay-in-place formwork |
| 112 | wall element | 152 | bio-degradable formwork |
| 113 | concrete structure | 200 | shell compound reservoir |
| 114 | hollow / bone shell element | 201 | pump |
| 115 | specific production point | 202 | conduit |
| 116 | printed shell material | 220 | shell delivering device / robot |
| 117 | deposited material balls in cross-section | 221 | shell compound nozzle |
| | | 222 | shell compound delivering head |
| 118 | concrete level | | |
| 119 | smooth surface | 300 | concrete reservoir |
| 120 | main structural element | 301 | pump |
| 121 | net intermediate structure | 302 | conduit |
| 122 | contacting point | 310 | accelerator reservoir |
| 123 | upper shell edge | 311 | pump |
| 124 | hollow shell | 320 | concrete delivering device / robot |
| 125 | concrete | | |
| 126 | hardening concrete | 321 | concrete nozzle |
| 127 | current upper surface of the | 322 | concrete delivering head |

## Claims

1. A method of vertical forming of a concrete structure (10) comprising the steps:
- providing a reservoir (300) of concrete (25) with a predetermined or adjustable hardening characteristic or any kind of continuous mixing and/or feeding of concrete with a predetermined or adjustable hardening characteristic;
- providing a formwork (124, 151, 152);
- placing the concrete (25) in the formwork (124, 151, 152) by pouring, casting, vibrating, spraying or any other means;
**characterized by** the additional steps
- providing a repository (200) of a shell compound;
- building up a self-supporting shell (124, 151, 152) acting as said formwork or as a part of said formwork providing essentially the contour or one or more parts of the contour of said concrete structure (10) through delivering the shell compound in an additive manufacturing process; and
- filling the self-supporting shell (124, 151, 152) with said concrete (25).

2. The method according to claim 1, wherein the shell formwork step of building up a self-supporting shell precedes the delivering of the concrete or wherein the shell formwork step of building up a self-supporting shell and the delivering of the concrete take place simultaneously and in parallel or in alternating substeps.

3. The method according to claim 1 or 2, wherein the formwork (124, 151, 152) built through the shell building step comprises a circumferential self-supporting shell (124, 151, 152) in one piece or comprises at least one self-supporting shell (124, 151, 152) reclining adherently at opposing free ends at non-additive-manufactured formwork parts and wherein the self-supporting shell (124, 151, 152) optionally comprises additional topological structures as one or more inner shells.

4. The method according to any one of claims 1 to 3, wherein the shell (124, 151, 152) is filled with concrete (25) in a way that the projecting edge (22) of the shell (124, 151, 152) in the vertical direction above the average height (130/131) of the concrete level (25, 127) is in a predetermined interval, especially in an interval between 1 millimetre and 30 centimetres, optionally between 5 millimetres and 20 centimetres and further optionally between 1 centimetre and 10 centimetres.

5. The method according to any one of claims 1 to 4, wherein the average vertical speed of the shell (124, 151, 152) building step is predetermined dependent on the hardening characteristic of the concrete (25) such that the hardening advances fast enough through the poured concrete (126) that the already built circumferential shell (124, 151, 152) adjacent to poured concrete (126) bears the sideways directed pressure of the hardening concrete (126).

6. The method according to any one of claims 1 to 5, wherein a reinforcing structure (30) is provided inside the projected contour of the shell (124, 151, 152).

7. The method according to any one of claims 1 to 5, wherein a reinforcing structure (35) is provided in an additional reinforcement grid building step, wherein the reinforcement building step is providing throughout the method a vertical reinforcement height which is higher than the corresponding vertical height shell (151, 152) surrounding the reinforcement (35).

8. The method according to claim 7, wherein at least one, preferably two of the three building steps, i.e. the additional reinforcement building step, the self-supporting circumferential shell building up step as well as the filling step of the concrete (25) are performed at the same time.

9. The method according to any one of claims 1 to 8, wherein the shell is prepared from the group encompassing a stay-in shell (151), an easy to remove shell as through peeling off, dissolving or melting, recyclable or bio-degradable (152).

10. The method according to any one of claims 1 to 9, wherein a setting or hardening accelerator is added and admixed before the filling step to the concrete (25) to be poured.

11. The method according to claim 10, wherein the setting or hardening accelerator is continuously admixed or is intermittently added.

12. The method according to any one of claims 1 to 11, wherein the concrete is from the group encompassing self-compacting concrete, vibrated concrete or sprayed concrete.

13. An apparatus of executing the method according to any one of claims 1 to 12, comprising a concrete reservoir (300), a shell compound repository (200), a concrete delivering device (320), a shell compound delivering device (220), a concrete conduit (302) connecting the concrete reservoir (300) with a concrete pouring nozzle (321), a shell compound conduit (202) connecting the shell compound repository (200) with a shell compound delivering device (221), a control unit (50) configured to control the movement of the concrete delivery device and of the shell compound delivery device (220 and 320).

14. The apparatus according to claim 13, further comprising a valve or pump (201) within the shell compound conduit (202) and/or a valve or pump within the concrete conduit (302), to control the opening of the valves or the function of the pumps to build up the shell and filling the contour with concrete (25).

15. The apparatus according to claim 13 or 14, wherein a further 3D additive manufacturing unit is provided within the apparatus to build up a reinforcing structure before or while the build up step of the shell compound.
